# EUROPEAN PATENT APPLICATION

(11) **EP 4 345 614 A1**
(43) Date of publication of application: **03.04.2024**
(21) Application number: 22827148.2
(22) Date of filing: 18.04.2022
(51) Int. Cl.: G06F 9/455

(54) **POD DEPLOYMENT METHOD AND APPARATUS**

(30) Priority: 22.06.2021 CN 202110693054
(71) Applicant: Huawei Cloud Computing Technologies Co., Ltd., Guizhou 550025 (CN)
(72) Inventor: WANG, Nannan, Guizhou 550025 (CN); WANG, Jun, Guizhou 550025 (CN)
(74) Representative: Maiwald GmbH
(86) International application number: PCT/CN2022/087397
(87) International publication number: WO 2022/267646

(57) **Abstract**

A pod deployment method and apparatus are provided, to increase container deployment flexibility, and meet an access requirement of a user. In this application, the method includes: A scheduler obtains requirement information and a pod annotation from an application management cluster. The requirement information includes a time period and a user quantity corresponding to the time period, and the pod annotation indicates a user quantity supported by a single pod. The scheduler determines, based on the user quantity corresponding to the time period and the user quantity supported by the single pod, a quantity M of pods that need to be deployed in the time period, and determines a target node used to deploy the M pods. The scheduler generates a deployment plan based on the quantity M of pods that need to be deployed in the time period and the target node used to deploy the M pods. Herein, M is an integer greater than or equal to 1.

## Description

### CROSS-REFERENCE TO RELATED APPLICATIONS

This application claims priority to Chinese Patent Application No. 202110693054.0, filed with the China National Intellectual Property Administration on June 22, 2021 and entitled "POD DEPLOYMENT METHOD AND APPARATUS", which is incorporated herein by reference in its entirety.

### TECHNICAL FIELD

This application relates to the field of resource scheduling technologies, and in particular, to a pod deployment method and apparatus.

### BACKGROUND

With development of a public cloud and the Internet, data generated by a massive device starts to increase exponentially in the future, and more multi-cloud interconnection services and edge cloud computing services emerge. Multi-cloud interconnection or edge sites may have respective application management clusters, to implement unified management of resources. Specifically, the application management cluster may include an upper-layer system and an underlying system. The upper-layer system may be configured to coordinate with a controller in the underlying system, to provide global resource scheduling management.

An existing application management cluster, for example, a Kubernetes cluster, includes an application programming interface (application programming interface, API) server, a controller, and a plurality of worker nodes. When a developer needs to deploy a pod (pod) corresponding to an application in the application management cluster, the developer may invoke an interface of an API server to release a pod creation request. The pod creation request may include a resource requirement for creating a pod, for example, a requirement for a quantity of central processing units (central processing unit, CPU) and a requirement for a storage resource. The controller may create the pod based on the pod creation request, and schedule the created pod to a worker node that meets a resource requirement, to complete deployment of the pod.

When the pod corresponding to the application is deployed in the application management cluster, a preset quantity of pods are usually deployed. If a quantity of currently deployed pods cannot meet a requirement imposed when a large quantity of users access the application, the application management cluster may further increase the quantity of deployed pods. However, it needs to take a specific period of time to deploy the pod. Consequently, some users fail to access the application during deployment of the pod.

### SUMMARY

This application provides a pod deployment method and apparatus, to increase container deployment flexibility, and meet an access requirement of a user.

According to a first aspect, this application provides a pod deployment method. The method includes: A scheduler (scheduler) obtains requirement information and a pod annotation from an application management cluster. The requirement information includes a time period and a user quantity corresponding to the time period, and the pod annotation indicates a user quantity supported by a single pod. The scheduler determines, based on the user quantity corresponding to the time period and the user quantity supported by the single pod, a quantity M of pods that need to be deployed in the time period, and determines a target node used to deploy the M pods. The scheduler generates a deployment plan based on the quantity M of pods that need to be deployed in the time period and the target node used to deploy the M pods. Herein, M is an integer greater than or equal to 1.

In the technical solution, the requirement information and the pod annotation are obtained from the application management cluster, and the quantity of pods that need to be deployed in the time period is determined based on the user quantity corresponding to the time period in the requirement information and the user quantity supported by the single pod in the pod annotation, so that quantities of pods that need to be deployed in different time periods can be determined in advance, to help better implement a pod deployment plan, and avoid a problem that user access fails when a quantity of currently deployed pods cannot meet a requirement imposed when a user accesses an application.

In a possible implementation, the requirement information further includes an address requirement and an operator requirement, and that the scheduler determines a target node used to deploy the M pods includes: The scheduler obtains a node label of a worker node by using an API server in the application management cluster. The node label includes an address and an operator of the worker node. The scheduler determines, as the target node used to deploy the M pods, a worker node whose address and operator meet the address requirement and the operator requirement that are included in the requirement information.

In the foregoing technical solution, the scheduler determines, from the worker node based on the address requirement and the operator requirement, a target node whose address in the node label meets the address requirement and whose operator in the node label meets the operator requirement. Therefore, the pod may be deployed on the target node that conforms to the requirement information. Correspondingly, the user may access, in a corresponding geographical range by using a corresponding operator, an application in the pod deployed on the target node, to prevent the user from accessing an application in a cross-region and/or cross-operator manner, and help reduce a user access delay.

In a possible implementation, the method further includes: The scheduler sends a virtual machine creation request to a cloud system. The virtual machine creation request indicates the cloud system to create a virtual machine. Correspondingly, the cloud system creates the corresponding virtual machine based on the virtual machine creation request. When the virtual machine is started, the virtual machine may send a node registration request to the API server. The node registration request includes the address and the operator of the virtual machine. The API server may store the address and the operator of the virtual machine in a database. The scheduler may obtain the address and the operator of the virtual machine from the database by using the API server, generate a node label of the virtual machine based on the address and the operator of the virtual machine, and determine the virtual machine as a worker node.

In the foregoing technical solution, the scheduler may indicate, based on a requirement, the cloud system to create the virtual machine, so that enough worker nodes (physical machines or virtual machines) can be used to deploy the pod.

In a possible implementation, the requirement information further includes an application identifier, and the pod annotation further includes an application identifier of an application running in the pod; and that a scheduler obtains requirement information and a pod annotation from an application management cluster includes: For a same application, the scheduler obtains, by using an API server in the application management cluster, requirement information and a pod annotation that correspond to an application identifier of the same application.

In a possible implementation, after the scheduler generates the deployment plan, the scheduler may further indicate, based on the deployment plan before a start moment of the time period, the application management cluster to deploy each of the M pods on a target node corresponding to the pod; and/or the scheduler indicates, based on the deployment plan after an end moment of the time period, the application management cluster to delete each of the M pods from a target node corresponding to the pod.

According to a second aspect, this application provides a pod deployment apparatus. The apparatus includes: an obtaining module, configured to obtain requirement information and a pod annotation from an application management cluster, where the requirement information includes a time period and a user quantity corresponding to the time period, and the pod annotation indicates a user quantity supported by a single pod; and a processing module, configured to: determine, based on the user quantity corresponding to the time period and the user quantity supported by the single pod, a quantity M of pods that need to be deployed in the time period, and determine a target node used to deploy the M pods; and generate a deployment plan based on the quantity M of pods that need to be deployed in the time period and the target node used to deploy the M pods, where M is an integer greater than or equal to 1.

In a possible implementation, the requirement information further includes an address requirement and an operator requirement, and when determining the target node used to deploy the M pods, the processing module is specifically configured to: obtain a node label of a worker node by using an API server in the application management cluster, where the node label includes an address and an operator of the worker node; and determine, as the target node used to deploy the M pods, a worker node whose address and operator meet the address requirement and the operator requirement that are included in the requirement information.

In a possible implementation, the processing module is further configured to: send a virtual machine creation request to a cloud system, where the virtual machine creation request indicates the cloud system to create a virtual machine; and obtain an address and an operator of the virtual machine by using an API server in the application management cluster, generate a node label of the virtual machine based on the address and the operator of the virtual machine, and determine the virtual machine as a worker node.

In a possible implementation, the requirement information further includes an application identifier, and the pod annotation further includes an application identifier of an application running in the pod; and when obtaining the requirement information and the pod annotation from the application management cluster, the obtaining module is specifically configured to: for a same application, obtain, by using an API server in the application management cluster, requirement information and a pod annotation that correspond to an application identifier of the same application.

In a possible implementation, after generating the deployment plan, the processing module is further configured to: indicate, based on the deployment plan before a start moment of the time period, the application management cluster to deploy each of the M pods on a target node corresponding to the pod; and/or indicate, based on the deployment plan after an end moment of the time period, the application management cluster to delete each of the M pods from a target node corresponding to the pod.

According to a third aspect, this application provides a computer-readable storage medium. The computer-readable storage medium stores a computer program or instructions, and when the computer program or the instructions are executed by a computing device, the method in any one of the first aspect or the possible implementations of the first aspect is implemented.

According to a fourth aspect, this application provides a computing device, including a processor. The processor is connected to a memory, the memory is configured to store a computer program, and the processor is configured to execute the computer program stored in the memory, so that the computing device performs the method in any one of the first aspect or the possible implementations of the first aspect.

According to a fifth aspect, this application provides a computer program product, including a computer program or instructions. When the computer program or the instructions are executed by a computing device, the method in any one of the first aspect or the possible implementations of the first aspect is implemented.

For technical effects that can be achieved in any one of the second aspect to the fifth aspect, refer to descriptions of beneficial effects in the first aspect. Details are not described herein again.

### BRIEF DESCRIPTION OF DRAWINGS

FIG. 1 is a diagram of an architecture of a system to which a pod deployment method is applicable according to this application;
FIG. 2 is a schematic flowchart of deploying a pod according to this application;
FIG. 3 is a schematic diagram of a newly defined pod description according to this application;
FIG. 4 is another schematic flowchart of deploying a pod according to this application;
FIG. 5 is a flowchart of creating a virtual machine according to this application;
FIG. 6 is a diagram of a structure of a pod deployment apparatus according to this application; and
FIG. 7 is a diagram of a structure of another pod deployment apparatus according to this application.

### DESCRIPTION OF EMBODIMENTS

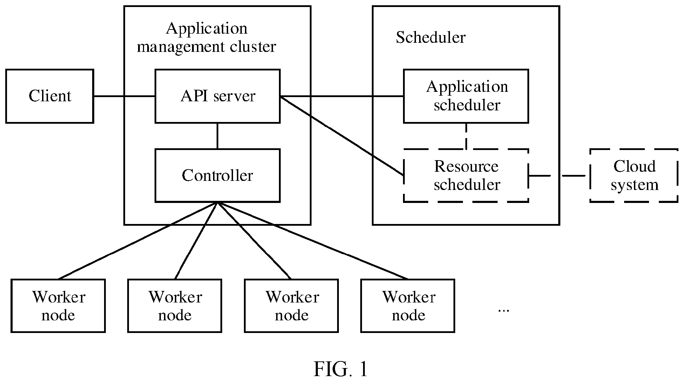

FIG. 1 is an example diagram of an architecture of a system to which a pod deployment method is applicable according to this application. For example, the system includes a client, an application management cluster, a scheduler, and a worker node.

The application management cluster may be used for automatic deployment, capacity expansion, and operation and management of a container cluster. For example, the application management cluster may include an API server and a controller. The API server may be used by the client to deliver a pod creation request to the application management cluster. The controller may obtain the pod creation request from the API server, create a preset quantity of pods based on the pod creation request, and schedule the preset quantity of pods to a corresponding worker node for running. For example, the application management cluster may be a Kubernetes cluster.

The scheduler includes an application scheduler (APP scheduler). The application scheduler may schedule an application requirement based on an application requirement scheduling instruction, for example, add an application requirement, modify an application requirement, delete an application requirement, or query an application requirement. In a possible manner, the API server may be further connected to the application scheduler, and the application scheduler may obtain, by using the API server, an application requirement scheduling instruction delivered by the client.

Optionally, the scheduler may further include a resource scheduler (resource scheduler). The resource scheduler may interact with an external resource, to provide an application with a virtual machine resource or a container resource required for running of the application. The external resource may be a cloud system, and the cloud system is, for example, one or more of a public cloud system, an edge cloud system, or a hybrid cloud system.

The worker node may be a physical machine or a virtual machine (virtual machine, VM). The worker node may be deployed at different geographical locations, and the worker node may also use different operator networks. There may be a plurality of worker nodes, and a quantity of worker nodes may change under scheduling of the resource scheduler. Specifically, the resource scheduler may indicate the cloud system, so that the cloud system creates or deletes a worker node, to control a change of the quantity of worker nodes.

It should be noted that the API server may serve as an external interface of the application management cluster, and the client, the application scheduler, the resource scheduler, the cloud system, or another apparatus each may access the application management cluster by using the API server.

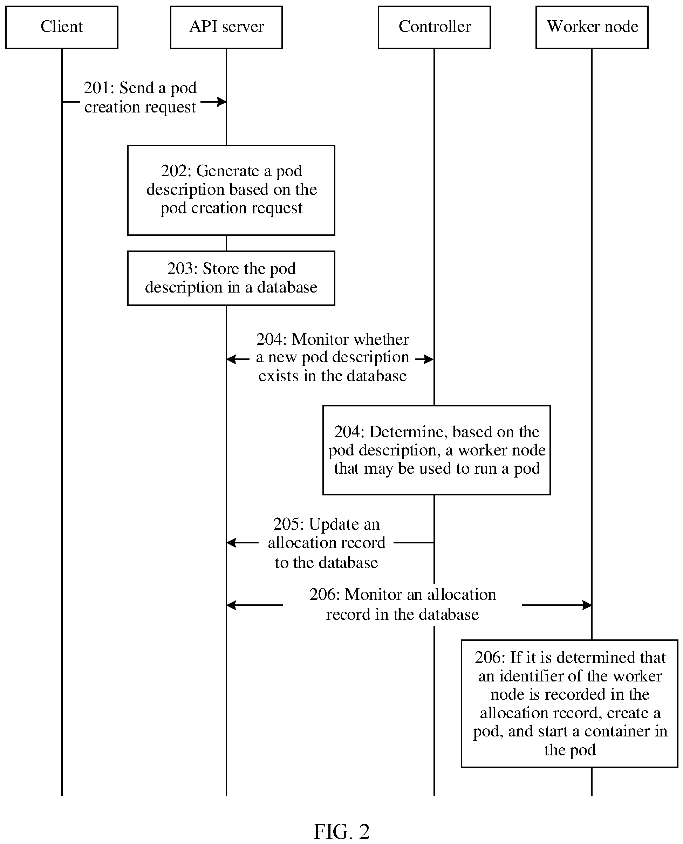

With reference to the example diagram of the architecture of the system shown in FIG. 1, a procedure in which an application management cluster creates a pod in this application is first explained and described. FIG. 2 is an example schematic flowchart of deploying a pod.

Step 201: A client sends a pod creation (create pod) request to an API server. Correspondingly, the API server receives the pod creation request from the client. The pod creation request may include a resource requirement for creating a pod, for example, a CPU quantity requirement or a storage resource requirement.

Step 202: The API server generates a pod description based on the pod creation request.

Step 203: The API server stores the pod description in a database.

Step 204: A controller detects, by using the API server, that a new pod description exists in the database, and determines, based on the pod description, a worker node (namely, a target node) that can be used to run the pod.

Step 205: The controller updates an allocation record to the database, where the allocation record includes an identifier of the target node.

Step 206: The worker node monitors an allocation record in the database by using the API server, and if the worker node determines that an identifier of the worker node is recorded in the allocation record, may create the pod, and start a container in the pod.

In the foregoing technical solution, when a developer delivers the pod creation request by using the client, the application management cluster may create a preset quantity of pods, monitor usage of the pods, and determine, based on the usage of the pods, whether a current quantity of pods may meet a requirement imposed when a user accesses an application, to determine whether to change the quantity of pods. For example, when the quantity of pods cannot meet the requirement imposed when the user accesses the application, the application management cluster may detect that use load of the pod is greater than a load threshold. Correspondingly, the application management cluster may deploy the preset quantity of pods again. However, it needs to take a specific period of time to deploy the pod. Consequently, some users fail to access the application during deployment of the pod.

Therefore, this application provides a pod deployment method. According to the method, a quantity of pods corresponding to a user requirement may be determined in advance. An application management cluster may deploy the quantity of pods at one time, to avoid a problem that some users fail to access an application because the quantity of pods cannot meet a requirement imposed when the user accesses the application.

It should be noted that, in this application, a function (or referred to as a method or an API) used to schedule an application requirement in a system may be defined in advance through an interface provided by the API server for an outside, so that a developer can deliver an application requirement scheduling instruction on a client. The application requirement scheduling instruction may include one or more of adding an application requirement, modifying an application requirement, deleting an application requirement, and querying an application requirement. An implementation of defining a function is described below by using adding an application requirement as an example.

In this application, the developer may invoke the function on the client and enter a corresponding parameter. It may also be understood that the developer may deliver, on the client to the API server, a scheduling instruction (which may be referred to as a first scheduling instruction) for adding an application requirement. The first scheduling instruction includes requirement information corresponding to application creation.

In an optional implementation, the requirement information may include an application identifier corresponding to a to-be-scheduled application, a time period, and a user quantity, to indicate a quantity of users (or referred to as access traffic) who need to use the application in the corresponding time period. For example, if the to-be-scheduled application is a real-time communication (real-time communication, RTC) service, the requirement information may be represented as "Application identifier: RTC, Time period: 10:00-11:00, and User quantity: 30000". The requirement information may be used to represent that 30000 users are expected to use the RTC service in the time period 10:00-11:00.

Further, the requirement information may further include an address requirement and/or an operator requirement, to indicate a quantity of users who need to use an application at a corresponding address in a corresponding time period by using a corresponding operator. For example, if the to-be-scheduled application is an RTC service, the requirement information may be represented as "Application identifier: RTC, Time period: 10:00-11:00, User quantity: 30000, Address requirement: Shanghai, and Operator requirement: Operator a". In this case, the requirement information may be used to represent that 30000 users are expected to use the RTC service in Shanghai in the time period 10:00-11:00 by using the operator a.

In this application, the developer may deliver a plurality of first scheduling instructions to the API server on the client, and each first scheduling instruction includes respective requirement information. Correspondingly, the API server may receive the plurality of first scheduling instructions from the client, and store, in the database, requirement information in the plurality of first scheduling instructions. The requirement information in the plurality of first scheduling instructions may be obtained by using the API server.

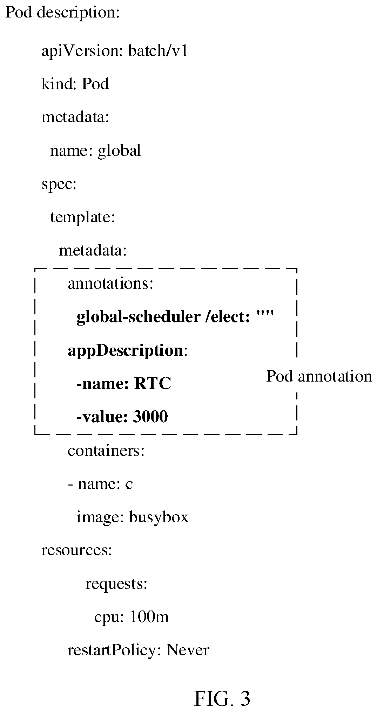

Further, a pod description may be further newly defined in this application. The pod description includes a pod annotation (annotations). The pod annotation may indicate a maximum user quantity that can be supported by a single pod when an application is run. For example, the pod annotation may include an identifier of an application run in the pod and the maximum user quantity that can be supported by the single pod. In this application, the newly defined pod description may also be stored in the database, and the pod description may be obtained by using the API server. For example, FIG. 3 shows a newly defined pod description according to this application. A pod corresponding to the pod description is used to run the RTC service. For the pod annotation in the pod description, refer to a bold part in FIG. 3. The pod annotation includes "appDescription (app description)" and "appDescription" includes "name: RTC; value: 3000". The pod annotation indicates that the application identifier is RTC, and the maximum user quantity that can be supported by the single pod is 3000.

Further, the pod description may further include a resource requirement for deploying the pod, as shown in "cpu: 100m" in FIG. 3. Herein, it should be explained that a basic unit of a CPU resource is millicore (that is, 1/1000 of a core), and the pod description indicates that 100m (that is, 100 millicores) are required for deploying the pod. Therefore, it may represent that 100 x 1/1000 = 0.1 core is required for deploying the pod. Therefore, it may be determined that 0.1 CPU is required for deploying the pod.

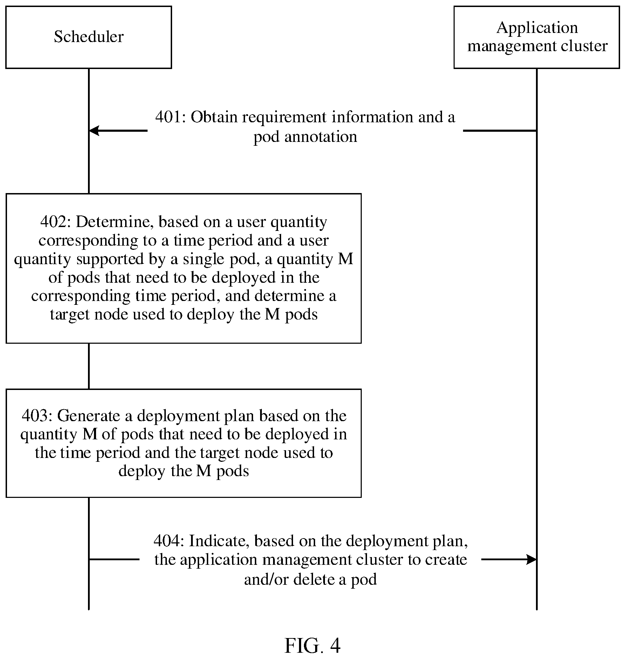

In this application, the application management cluster may provide the pod for a plurality of applications. Correspondingly, a pod description and requirement information that correspond to each application may be defined. For example, for an application 1, requirement information 1 and a pod description 1 may be defined. The requirement information 1 represents a quantity of users who use the application 1 in a time period 1, and a pod annotation 1 in the pod description 1 represents a user quantity that can be supported by the single pod when the application 1 is run. For an application 2, requirement information 2 and a pod description 2 may be defined. The requirement information 2 represents a quantity of users who use the application 2 in a time period 2, and a pod annotation 2 in the pod description 2 represents a user quantity that can be supported by the single pod when the application 2 is run. When generating a deployment plan, a scheduler may generate a deployment plan corresponding to the application for a pod description (or a pod annotation) and requirement information of a same application. For details, refer to descriptions in the following embodiment related to FIG. 4.

Based on the foregoing descriptions, for a same application, a quantity of pods that need to be deployed may be determined based on a pod description and requirement information that correspond to the application, to uniformly deploy pods whose quantity is the quantity. An example pod deployment procedure provided in this application is explained and described with reference to FIG. 4. The procedure is as follows.

Step 401: A scheduler obtains requirement information and a pod annotation from an application management cluster.

The scheduler may obtain the requirement information and the pod annotation from the application management cluster by using the API server. In a possible implementation, for a same application, the scheduler may obtain, based on an application identifier of the same application by using the API server in the application management cluster, requirement information and a pod annotation that correspond to the application identifier of the same application. An application identifier in the requirement information is the same as an application identifier in the pod annotation. In a possible implementation, the requirement information may be information that is in a first scheduling instruction and that is obtained by the scheduler by using the API server.

In this application, the scheduler may obtain a plurality of pieces of requirement information from the application management cluster. For example, the plurality of pieces of requirement information is, for example, requirement information 1, requirement information 2, and requirement information 3. The requirement information 1 is "Application identifier: RTC, Time period: 10:00-11:00, User quantity: 30000, Address requirement: Shanghai, Operator requirement: Operator a". The requirement information 2 is "Application identifier: RTC, Time period: 11:00-12:00, User quantity: 30000, Address requirement: Hunan, Operator requirement: operator b". The requirement information 3 is "Application identifier: RTC, Time period: 12:00-13:00, User quantity: 45000, Address requirement: Zhejiang, Operator requirement: operator b". Correspondingly, the pod annotation obtained by the scheduler from the application management cluster is, for example, "Application identifier: RTC; value: 3000".

Step 402: The scheduler determines, based on a user quantity corresponding to a time period and a user quantity supported by a single pod, a quantity M of pods that need to be deployed in the corresponding time period, and determines a target node used to deploy the M pods, where M is a positive integer greater than or equal to 1.

The scheduler may determine, based on a user quantity corresponding to a time period and a user quantity supported by the single pod in the requirement information, a quantity of pods that need to be deployed in the time period corresponding to the requirement information. The requirement information 1 is used as an example. It may be determined that 10 pods ((User quantity: 30000)/(value: 3000) = 10) need to be deployed in the time period 10:00-11:00. Other requirement information is similar, to obtain deployment requirements of quantities of pods in different time periods corresponding to all pieces of requirement information.

Further, for each piece of requirement information, the scheduler may determine, from a plurality of worker nodes, N target nodes used to deploy a pod corresponding to the requirement information. Herein, N is a positive integer greater than or equal to 1. In an optional manner, the scheduler may determine a remaining resource of each worker node, and determine whether the remaining resource of the worker node may meet a resource requirement for deploying the pod. When the remaining resource of the worker node meets the resource requirement for deploying the pod, the worker node may serve as the target node. For example, three CPUs are required for deploying one resource set, and eight CPUs remain on a worker node 0. The scheduler may determine that the pod may be deployed on the worker node 0, and a maximum of two pods may be deployed. However, two CPUs remain on a worker node 1, and the scheduler may determine that the pod cannot be deployed on the worker node 1. In this way, N target nodes used to deploy the pod corresponding to the requirement information are obtained.

In this application, each worker node may correspond to a node label of the worker node. The node label may be generated based on a location and/or an operator of the worker node when the worker node is deployed. The operator of the worker node may be understood as an operator that provides a network communication service for the worker node. The scheduler may obtain the node label of each worker node from a database by using the API server.

The node label may include the location and/or the operator of the worker node. An example in which the node label includes the location and the operator of the worker node is used for description. For example, if the worker node 0 is deployed in Shanghai, and an operator of the worker node is the operator a, a node label 0 of the worker node 0 may be "Address: Shanghai, Operator: Operator a".

Correspondingly, the requirement information may further include an address requirement and an operator requirement. The scheduler may obtain a node label of each of the plurality of worker nodes, and then determine the N target nodes from the plurality of worker nodes based on the address requirement and the operator requirement that are included in the requirement information and the node label of each worker node. An address in the node label of the target node meets the address requirement in the requirement information, and the operator in the node label meets the operator requirement in the requirement information. For example, the requirement information 1 is "Application identifier: RTC, Time period: 10:00-11:00, User quantity: 30000, Address requirement: Shanghai, Operator requirement: Operator a". The scheduler may obtain the node labels of the plurality of worker nodes. For example, the node label 0 of the worker node 0 is "Address: Shanghai, Operator: Operator a", a node label 1 of the worker node 1 is "Address: Shanghai, Operator: Operator b", and a node label 2 of a worker node 2 is "Address: Hunan, Operator: Operator b". The scheduler may determine that the node label 0 of the worker node 0 meets the address requirement and the operator requirement in the requirement information, but the worker node 1 or the worker node 2 does not meet the address requirement and the operator requirement in the requirement information.

In the foregoing manner, the scheduler determines, from the worker node based on the address requirement and/or the operator requirement, a target node whose address in the node label meets the address requirement and/or whose operator in the node label meets the operator requirement. Therefore, the pod may be deployed on the target node that meets the requirement information. Correspondingly, the user may access, by using a corresponding operator and/or in a corresponding geographical range, an application in the pod deployed on the target node, to prevent the user from accessing an application in a cross-region and/or cross-operator manner, and help reduce a user access delay.

In a possible implementation, the scheduler may determine a score of each worker node based on the requirement information, a remaining resource of each worker node, and the location and/or the operator of the worker node in the node label, and determine the N target nodes from the plurality of worker nodes based on the score.

Step 403: The scheduler generates a deployment plan based on the quantity M of pods that need to be deployed in the time period and the target node used to deploy the M pods.

The scheduler may determine, based on the requirement information, the quantity M of pods corresponding to the requirement information and the target nodes used to deploy the M pods, and then generate the deployment plan corresponding to the requirement information.

For example, the scheduler may generate the deployment plan in Table 1 based on the requirement information 1, the requirement information 2, and the requirement information 3. The requirement information 1 corresponds to a deployment plan 1, the requirement information 2 corresponds to a deployment plan 2, and the requirement information 3 corresponds to a deployment plan 3. For example, a time period included in the deployment plan 1 is 10:00-11:00, an address/operator is Shanghai/Operator a, 10 pods need to be deployed, and the 10 pods may be deployed on a target node 11 to a target node 1N. Other requirement information corresponds to similar deployment plans.

**Table 1**

| Deployment plan | Time period | Address/Operator | Deployment requirement | Target node |
|---|---|---|---|---|
| Deployment plan 1 | 10:00-11:00 | Shanghai/Operator a | 10 pods | Target node 11 to target node 1N |
| Deployment plan 2 | 11:00-12:00 | Hunan/Operator b | 10 pods | Target node 21 to target node 2N |
| Deployment plan 3 | 12:00-13:00 | Zhejiang/Operator b | 15 pods | Target node 31 to target node 3N |

Step 404: The scheduler indicates, based on the deployment plan, the application management cluster to create and/or delete a pod.

The scheduler may indicate, based on the deployment plan, the application management cluster to deploy a pod and/or delete a pod on a corresponding target node. In this application, the scheduler may indicate, based on the deployment plan before a start moment of a time period of the deployment plan, the application management cluster to deploy a pod on a corresponding target node. For example, the scheduler may determine a first moment based on a start moment and first preset duration, and indicate, at the first moment, the application management cluster to deploy the pod on the corresponding target node. The first preset duration may be greater than or equal to duration required for deploying the pod. The scheduler may further indicate, based on the deployment plan after an end moment of the time period of the deployment plan, the application management cluster to delete the pod from the corresponding target node. For example, the scheduler may determine a second moment based on the end moment and second preset duration, and indicate, at the second moment, the application management cluster to delete the pod from the corresponding target node.

The deployment plan 1 is still used for explanation. Because the deployment plan 1 indicates that 10 pods need to be deployed within 10:00-11:00, the scheduler may send a pod creation request to the application management cluster before 10:00 (for example, 9:59). The pod creation request may indicate the application management cluster to deploy a total of 10 pods on the target node 11 to the target node 1N. The scheduler may further send a pod deletion request to the application management cluster after 11:00 (for example, 11:01). The pod deletion request may indicate the application management cluster to delete the previously deployed 10 pods from the target node 11 to the target node 1N.

It should be noted that, the scheduler may determine, based on information such as a remaining resource of the target node and a location and/or an operator of the worker node in the node label, to deploy one or more pods on the target node. Correspondingly, when sending the pod creation request to the application management cluster, the scheduler may indicate, to the application management cluster, a specific target node used to deploy a specific pod. As shown in the foregoing example, the scheduler determines that the deployment plan 1 includes five target nodes, and a correspondence between the five target nodes and the 10 pods is shown in Table 2. For example, the scheduler may send a pod creation request to the application management cluster before 10:00. The pod creation request may indicate the application management cluster to deploy a pod 1 and a pod 2 on the target node 11. Further, the scheduler may further send a pod deletion request to the application management cluster after 11:00. The pod deletion request may indicate the application management cluster to delete the pod 1 and the pod 2 from the target node 11.

**Table 2**

| Target node | Pod |
|---|---|
| Target node 11 | Pod 1 and pod 2 |
| Target node 12 | Pod 3 |
| Target node 13 | Pod 4, pod 5, and pod 6 |
| Target node 14 | Pod 7 |
| Target node 15 | Pod 8, pod 9, and pod 10 |

It should be further noted that the scheduler may process a plurality of deployment plans, to obtain a more effective deployment method. For example, the deployment plan 1 indicates to deploy 10 pods within 10:00-11:00 on a target node corresponding to Shanghai/Operator a. In addition, a deployment plan 4 further indicates to deploy 15 pods within 11:00-12:00 on the target node corresponding to Shanghai/Operator a. Therefore, the scheduler may not send the pod deletion request to the application management cluster after 11:00, but send the pod creation request to the application management cluster before 11:00. The pod creation request indicates the application management cluster to deploy five pods on the indicated target node. In this manner, frequent creation and deletion of the pod can be avoided, to help reduce a delay and resources.

In this application, the scheduler may not determine the target node from a current worker node based on the deployment plan. In this case, the scheduler may indicate to deploy a new worker node, and determine the target node from the newly deployed worker node. The newly deployed worker node may be a physical machine or a virtual machine.

In a possible implementation, the scheduler invokes a virtual machine creation interface in the cloud system, to indicate the cloud system to create a virtual machine. The created virtual machine may be used to run a pod that needs to be deployed in the deployment plan of the scheduler.

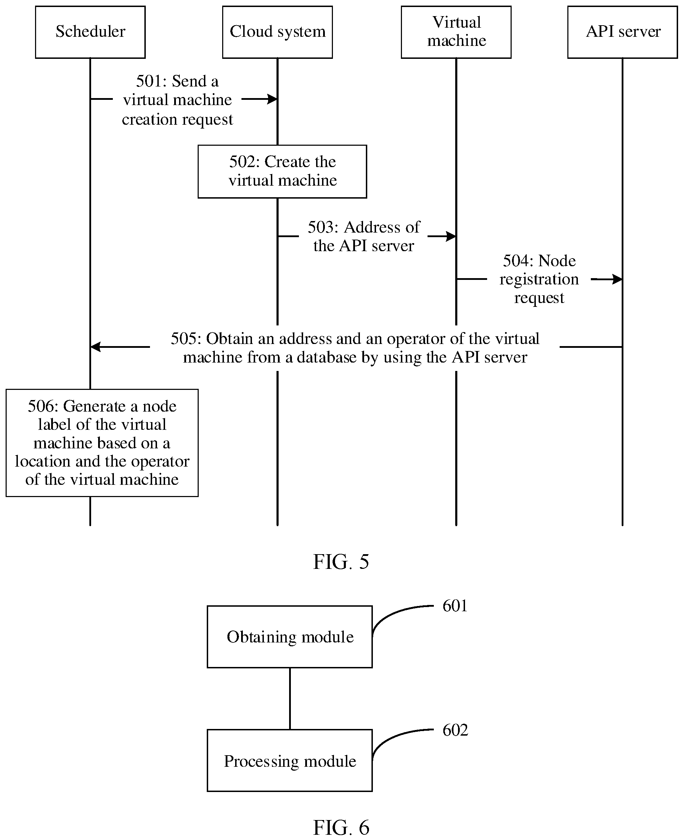

FIG. 5 is an example flowchart of creating a virtual machine. A procedure is as follows.

Step 501: A scheduler sends a virtual machine creation request to a cloud system, where the virtual machine creation request may indicate the cloud system to create a preset quantity of virtual machines that meet an address requirement and an operator requirement.

Step 502: In response to the virtual machine creation request, the cloud system creates, by using a created virtual machine image, a preset quantity of virtual machines that meet an address requirement and an operator requirement.

Step 503: The cloud system transfers an address (for example, an internet protocol (internet protocol, IP) address) of an API server to the virtual machine in a parameter injection or script injection manner.

Step 504: After being run, the virtual machine may automatically execute a script to send a node registration request to the API server, where the node registration request may include an address and an operator of the virtual machine. Further, the API server may correspondingly store the address and the operator of the virtual machine in a database.

Step 505: The scheduler obtains a location and the operator of the virtual machine from the database by using the API server.

506: The scheduler generates a node label of the virtual machine based on the location and the operator of the virtual machine. The scheduler may use the virtual machine as a newly added worker node.

In this application, the scheduler may send the virtual machine creation request to the cloud system after determining that a current worker node cannot meet a requirement of deploying the pod. Alternatively, a preset quantity of virtual machines may be created in advance, and a situation of a pod deployed in the virtual machine is monitored based on a preset period, to increase or decrease the quantity of virtual machines.

In this manner, the scheduler may indicate, based on a requirement, the cloud system to create the virtual machine, so that enough worker nodes (physical machines or virtual machines) can be used to deploy the pod. Further, the scheduler may further indicate, based on usage of the virtual machine, the cloud system to delete an unnecessary virtual machine, to help save virtual machine resources.

In this application, the scheduler may include the application scheduler and the resource scheduler that are shown in FIG. 1 as an example. In a possible implementation, the application scheduler may be configured to implement the method in the method embodiment shown in FIG. 4, and the scheduler in the embodiment related to FIG. 4 may be replaced with the application scheduler. The resource scheduler may be configured to implement the method in the method embodiment shown in FIG. 5, and the scheduler in the embodiment related to FIG. 5 may be replaced with the resource scheduler.

In the technical solution, the scheduler obtains the requirement information and the pod annotation from the application management cluster, and determines, based on the user quantity corresponding to the time period in the requirement information and the user quantity supported by the single pod in the pod annotation, quantities of pods that need to be deployed in different time periods, so that quantities of pods that need to be deployed in different time periods can be determined in advance, to help better implement a pod deployment plan, and avoid a problem that user access fails when a quantity of currently deployed pods cannot meet a requirement imposed when a user accesses an application.

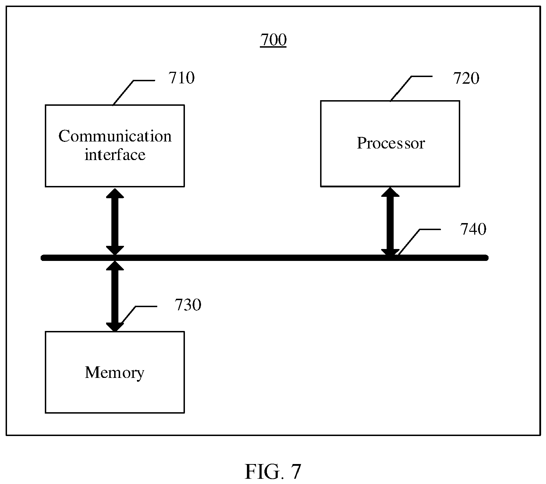

Based on the foregoing content and a same concept, FIG. 6 and FIG. 7 each are a schematic diagram of a structure of a possible apparatus according to this application. The apparatus may be configured to implement functions of a scheduler in the method embodiments, and therefore can also implement beneficial effects of the method embodiments. In this application, the apparatus may be the scheduler shown in FIG. 1, and may be specifically the application scheduler or the resource scheduler shown in FIG. 1.

As shown in FIG. 6, the apparatus 600 includes: an obtaining module 601, configured to obtain requirement information and a pod annotation from an application management cluster, where the requirement information includes a time period and a user quantity corresponding to the time period, and the pod annotation indicates a user quantity supported by a single pod; and a processing module 602, configured to: determine, based on the user quantity corresponding to the time period and the user quantity supported by the single pod, a quantity M of pods that need to be deployed in the time period, and determine a target node used to deploy the M pods; and generate a deployment plan based on the quantity M of pods that need to be deployed in the time period and the target node used to deploy the M pods, where M is an integer greater than or equal to 1.

FIG. 7 shows an apparatus 700 according to an embodiment of this application. The apparatus shown in FIG. 7 may be an implementation of a hardware circuit of the apparatus shown in FIG. 6. The apparatus may be applied to the foregoing flowcharts, and perform functions of a scheduler in the method embodiments. For ease of description, FIG. 7 shows only main components of the apparatus.

The apparatus 700 shown in FIG. 7 includes a communication interface 710, a processor 720, and a memory 730. The memory 730 is configured to store program instructions and/or data. The processor 720 may cooperate with the memory 730. The processor 720 may execute the program instructions stored in the memory 730. When the instructions or the program stored in the memory 730 is executed, the processor 720 is configured to perform an operation performed by the processing module 602 in the foregoing embodiment, and the communication interface 710 is configured to perform an operation performed by the obtaining module 601 in the foregoing embodiment.

The memory 730 is coupled to the processor 720. The coupling in this embodiment of this application may be an indirect coupling or a communication connection between apparatuses, units, or modules in an electrical form, a mechanical form, or another form, and is used for information exchange between the apparatuses, the units, or the modules. At least one of the memories 730 may be included in the processor 720.

In this embodiment of this application, the communication interface may be a transceiver, a circuit, a bus, a module, or a communication interface of another type. In this embodiment of this application, when the communication interface is a transceiver, the transceiver may include an independent receiver and an independent transmitter, or may be a transceiver or a communication interface integrated with sending and receiving functions.

The apparatus 700 may further include a communication line 740. The communication interface 710, the processor 720, and the memory 730 may be interconnected through a communication line 740. The communication line 740 may be a peripheral component interconnect (peripheral component interconnect, PCI for short) bus, an extended industry standard architecture (extended industry standard architecture, EISA for short) bus, or the like. The communication line 740 may be classified into an address bus, a data bus, a control bus, and the like. For ease of representation, the bus is represented by using only one thick line in FIG. 7. However, it does not mean that there is only one bus or only one type of bus.

Based on the foregoing content and a same concept, this application provides a computer-readable storage medium. The computer-readable storage medium stores a computer program or instructions, and when the computer program or the instructions are executed by a computing device, the method in the method embodiments is implemented.

Based on the foregoing content and a same concept, this application provides a computing device, including a processor. The processor is connected to a memory, the memory is configured to store a computer program, and the processor is configured to execute the computer program stored in the memory, so that the computing device implements the method in the method embodiments.

Based on the foregoing content and a same concept, this application provides a computer program product. The computer program product includes a computer program or instructions, and when the computer program or the instructions are executed by an apparatus, the method in the method embodiments is implemented.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A pod deployment method, comprising:
obtaining, by a scheduler, requirement information and a pod annotation from an application management cluster, wherein the requirement information comprises a time period and a user quantity corresponding to the time period, and the pod annotation indicates a user quantity supported by a single pod;
determining, by the scheduler based on the user quantity corresponding to the time period and the user quantity supported by the single pod, a quantity M of pods that need to be deployed in the time period, and determining a target node used to deploy the M pods, wherein M is an integer greater than or equal to 1; and
generating, by the scheduler, a deployment plan based on the quantity M of pods that need to be deployed in the time period and the target node used to deploy the M pods.

2. The method according to claim 1, wherein the requirement information further comprises an address requirement and an operator requirement, and the determining, by the scheduler, a target node used to deploy the M pods comprises:
obtaining, by the scheduler, a node label of a worker node by using an application programming interface API server in the application management cluster, wherein the node label comprises an address and an operator of the worker node; and
determining, by the scheduler as the target node used to deploy the M pods, a worker node whose address and operator meet the address requirement and the operator requirement that are comprised in the requirement information.

3. The method according to claim 1, further comprising:
sending, by the scheduler, a virtual machine creation request to a cloud system, wherein the virtual machine creation request indicates the cloud system to create a virtual machine; and
obtaining, by the scheduler by using an API server in the application management cluster, an address and an operator of the virtual machine, generating a node label of the virtual machine based on the address and the operator of the virtual machine, and determining the virtual machine as a worker node.

4. The method according to claim 1, wherein the requirement information further comprises an application identifier, and the pod annotation further comprises an application identifier of an application running in the pod; and
the obtaining, by a scheduler, requirement information and a pod annotation from an application management cluster comprises:
for a same application, obtaining, by the scheduler by using an API server in the application management cluster, requirement information and a pod annotation that correspond to an application identifier of the same application.

5. The method according to claim 1, wherein after the generating, by the scheduler, a deployment plan, the method further comprises:
indicating, by the scheduler based on the deployment plan before a start moment of the time period, the application management cluster to deploy each of the M pods on a target node corresponding to the pod; and/or
indicating, by the scheduler based on the deployment plan after an end moment of the time period, the application management cluster to delete each of the M pods from a target node corresponding to the pod.

6. A pod deployment apparatus, comprising:
an obtaining module, configured to obtain requirement information and a pod annotation from an application management cluster, wherein the requirement information comprises a time period and a user quantity corresponding to the time period, and the pod annotation indicates a user quantity supported by a single pod; and
a processing module, configured to: determine, based on the user quantity corresponding to the time period and the user quantity supported by the single pod, a quantity M of pods that need to be deployed in the time period, and determine a target node used to deploy the M pods; and generate a deployment plan based on the quantity M of pods that need to be deployed in the time period and the target node used to deploy the M pods, wherein M is an integer greater than or equal to 1.

7. The apparatus according to claim 6, wherein the requirement information further comprises an address requirement and an operator requirement, and when determining the target node used to deploy the M pods, the processing module is specifically configured to:
obtain a node label of a worker node by using an application programming interface API server in the application management cluster, wherein the node label comprises an address and an operator of the worker node; and
determine, as the target node used to deploy the M pods, a worker node whose address and operator meet the address requirement and the operator requirement that are comprised in the requirement information.

8. The apparatus according to claim 6, wherein the processing module is further configured to:
send a virtual machine creation request to a cloud system, wherein the virtual machine creation request indicates the cloud system to create a virtual machine; and
obtain, by using an API server in the application management cluster, an address and an operator of the virtual machine, generate a node label of the virtual machine based on the address and the operator of the virtual machine, and determine the virtual machine as a worker node.

9. The apparatus according to claim 6, wherein the requirement information further comprises an application identifier, and the pod annotation further comprises an application identifier of an application running in the pod; and
when obtaining the requirement information and the pod annotation from the application management cluster, the obtaining module is specifically configured to:
for a same application, obtain, by using an API server in the application management cluster, requirement information and a pod annotation that correspond to an application identifier of the same application.

10. The apparatus according to claim 6, wherein after generating the deployment plan, the processing module is further configured to:
indicate, based on the deployment plan before a start moment of the time period, the application management cluster to deploy each of the M pods on a target node corresponding to the pod; and/or
indicate, based on the deployment plan after an end moment of the time period, the application management cluster to delete each of the M pods from a target node corresponding to the pod.

11. A computer-readable storage medium, wherein the computer-readable storage medium stores a computer program or instructions, and when the computer program or the instructions are executed by a computing device, the method according to any one of claims 1 to 5 is implemented.

12. A computing device, comprising a processor, wherein the processor is connected to a memory, the memory stores a computer program, and the processor is configured to execute the computer program stored in the memory, so that the computing device performs the method according to any one of claims 1 to 5.
